# EUROPEAN PATENT APPLICATION

(11) **EP 4 617 633 A1**
(43) Date of publication of application: **17.09.2025**
(21) Application number: 25151993.0
(22) Date of filing: 15.01.2025
(51) Int. Cl.: G01L 9/00, G01L 19/04

(54) **COMPACT INSTRUMENT FOR ACCURATE MEASUREMENT OF PRESSURE OF AN ENVIRONMENT**

(30) Priority: 15.03.2024 US 202418606581
(71) Applicant: Simmonds Precision Products, Inc., Vergennes, VT 05491 (US)
(72) Inventor: GIRARD, Joshua, Vergennes, 05491 (US); DEWIND, Eric M., Vergennes, 05491 (US)
(74) Representative: Dehns

(57) **Abstract**

Apparatus and associated methods relate to measuring pressure of an external environment using a graded index (GRIN) lens and first and second Fabry-Perot interferometers, each axially aligned with one another. The GRIN lens collimates a beam diverging from a face of an optical fiber so as to direct the collimated beam to the first and second Fabry-Perot interferometers. The first Fabry-Perot interferometer is pressure isolated from the external environment but not temperature isolated. Therefore, the resonant frequency of the first Fabry-Perot interferometer is indicative of temperature. The second Fabry-Perot interferometer has a cavity that changes dimension in response to changes in pressure and temperature of the external atmosphere. The second Fabry-Perot interferometers has a second resonant frequency that is not integer multiple of the first resonant frequency. Pressure is determined based on the first and second resonant frequencies.

## Description

### BACKGROUND

Managing fuel in an aircraft is important for many reasons. One must ensure that a sufficient amount of fuel for safe arrival to a scheduled destination. Measuring metrics of the fuel are used to ensure that the engines are supplied the amount corresponding to the control of the aircraft as flown by the pilot. These various metrics of fuel can include pressure, temperature, density, etc. These metrics can be used to precisely throttle the flow of fuel to the engines, to accurately determine the quantity of fuel remaining in the fuel tanks, to balance the weights of fuel in the various fuel tanks, etc.

### SUMMARY

Some embodiments relate to a system for measuring pressure of an external environment. The system includes an optical plate, a diaphragm, an optical cavity, and a graded index (GRIN) lens. The optical plate has nominal thickness *L₁(T₀)* measured along an axis perpendicular to first and second parallel faces that are partially reflective to light normally incident thereon from within the optical plate. Such configuration forms a first Fabry-Perot interferometer between the first and second parallel faces. The diaphragm has a mirrored face substantially parallel to and separated from the second face of the optical plate. The diaphragm deforms in response to changes in the pressure of the external environment thereby moving the mirrored face. The optical cavity is formed between the mirrored face of the diaphragm and the second face of the optical plate and spaced by a separating member. The separating member separates the mirrored face of the diaphragm and the second face of the optical plate by a nominal separation distance *L₂(T₀, P₀).* Such a configuration forms a second Fabry-Perot interferometer within the optical cavity between the second face of the optical plate and the mirrored face of the diaphragm. The graded-index (GRIN) lens is axially aligned with and adjacent to the first Fabry-Perot interferometer. The GRIN lens is configured to receive, at a first face of the GRIN lens, a diverging optical beam projected from a face of an optical fiber and to collimate the diverging optical beam so as to transmit a collimated optical beam from a second face of the GRIN lens to the first and second Fabry-Perot interferometers.

Some embodiments relate to a method for measuring pressure of an external environment. The method includes forming a first Fabry-Perot interferometer between first and second parallel faces of an optical plate with nominal thickness *L₁(T₀)* measured along an axis perpendicular to first and second parallel faces, which are partially reflective to light normally incident thereon from within the optical plate. The method includes by deflecting, in response to changes in the pressure of the external environment, a diaphragm having a mirrored face substantially parallel to and separated from the second face of the optical plate, thereby moving the mirrored face. Then the method includes forming a second Fabry-Perot interferometer within an optical cavity formed between a mirrored face of a diaphragm and the second face of the optical plate. The method includes separating the mirrored face of a diaphragm and the second face of the optical plate by a nominal separation distance *L₂(T₀)* using a separating member. The method also includes collimating a diverging optical beam projected from a face of an optical fiber using a graded-index (GRIN) lens that is axially aligned with and adjacent to the first Fabry-Perot interferometer.

### BRIEF DESCRIPTION OF THE DRAWINGS

The material described herein is illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Further, where considered appropriate, reference labels have been repeated among the figures to indicate corresponding or analogous elements. In the figures:
FIG. 1 is a perspective view of an aircraft equipped with a system for measuring fuel pressure using temperature-compensated Fabry-Perot pressure sensors.
FIG. 2 is a perspective view of an example of a wing fuel tank with a system for measuring fuel pressure using temperature-compensated Fabry-Perot pressure sensors.
FIG. 3 is a perspective view of a system for measuring pressure of an ambient environment using a single temperature-compensated Fabry-Perot pressure sensor.
FIG. 4 is a cross-sectional diagram of an embodiment of a temperature-compensated Fabry-Perot pressure sensor.
FIG. 5 is an example of a spectral response of an embodiment of a temperature-compensated Fabry-Perot pressure sensor.
FIG. 6 is a graph of a family of pressure-frequency relations for a Fabry-Perot interferometer that is both pressure and temperature dependent.

### DETAILED DESCRIPTION

Apparatus and associated methods relate to measuring pressure of an external environment using a graded index (GRIN) lens and first and second Fabry-Perot interferometers, each axially aligned with one another. The GRIN lens collimates a beam diverging from a face of an optical fiber so as to direct the collimated beam to the first and second Fabry-Perot interferometers. The first Fabry-Perot interferometer is pressure isolated from the external environment but not temperature isolated. Therefore, the resonant frequency of the first Fabry-Perot interferometer is indicative of temperature. The second Fabry-Perot interferometer has a cavity that changes dimension in response to changes in pressure and temperature of the external atmosphere. The second Fabry-Perot interferometers has a second resonant frequency that is not integer multiple of the first resonant frequency. Pressure is determined based on the first and second resonant frequencies.

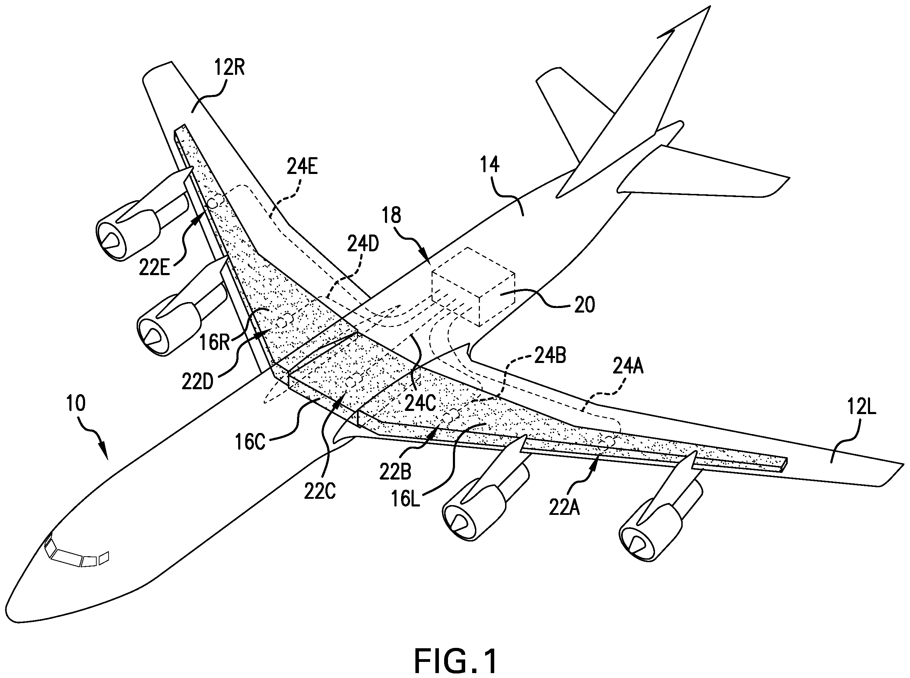

FIG. 1 is a perspective view of an aircraft equipped with a system for measuring fuel pressure using temperature-compensated Fabry-Perot pressure sensors. In FIG. 1, aircraft 10 includes left and right wings 12L and 12R and fuselage 14. Within left and right wings 12L and 12R are wing fuel tanks 16L and 16R, respectively, and within fuselage is fuselage fuel tank 16C. Aircraft 10 is further equipped with pressure-measurement system 18 for measuring pressure of fuel that resides in fuel tanks 16L, 16C and 16R. Pressure-measurement system 18 includes optical interrogator 20 interrogating Fabry-Perot pressure sensors 22A-22E. Each of Fabry-Perot pressure sensors 22A-22E is optically coupled to optical interrogator 16 via a corresponding one of optical fibers 24A-24E. Each of Fabry-Perot pressure sensors 22A-22E can be located at a location near a bottom of fuel tanks 16L, 16C, or 16R, so that a metric of pressure, as measured by Fabry-Perot pressure sensor 22A, 22B, 22C, 22D or 22E is indicative of an amount of fuel at such location.

In the embodiment depicted in FIG. 1, left wing fuel tank 16L has two Fabry-Perot pressure sensors 22A and 2B located therein. It is not uncommon to have a plurality of pressure sensors, even a great number of pressure sensors, in fuel tanks of aircraft. Using such a plurality of pressure sensors 22A-22E permits a more precise measurement of the amount of fuel remaining in fuel tanks 16L, 16C and 16R. Because wings 12L and 12R and fuselage 14 have shapes appropriate for aircraft 10, fuel tanks 16L, 16C and 16R can have irregular shapes. To maximize fuel capacity, fuel tanks 16L, 16C and 16R can have shapes that are conformal with the shapes of wings 12L and 12R and fuselage 14, or otherwise utilize the space available at such locations there-within. Thus, the depth of the fuel within fuel tanks 16L, 16C and 16R varies across lateral dimensions of fuel tanks 16L, 16C and 16R.

Moreover, when aircraft 10 is in flight, forces within fuel tanks 16L, 16C and 16R can have various magnitudes and directions with respect to a magnitude and direction of a nominal force there-within (e.g., the force due to gravity) when aircraft 10 is stationary and parked at a terminal. For example, when climbing after takeoff, forces can have a greater magnitude and be directed aft of such a nominal force. While the aircraft is turning, forces can have different magnitude and/or directions than the nominal force. For example, during an uncoordinated turn, forces can be directed left and right of such a nominal direction. Such shapes of fuel tanks 16L, 16C and 16R as well as such directions of the forces experienced within fuel tanks 16L, 16C and 16R can cause the fuel to move about therein. Thus, the fuel pressure at these various locations of Fabry-Perot pressure sensors 22A-22E can vary in response to the flight conditions and can be different at the various locations within fuel tanks 16L, 16C and 16R.

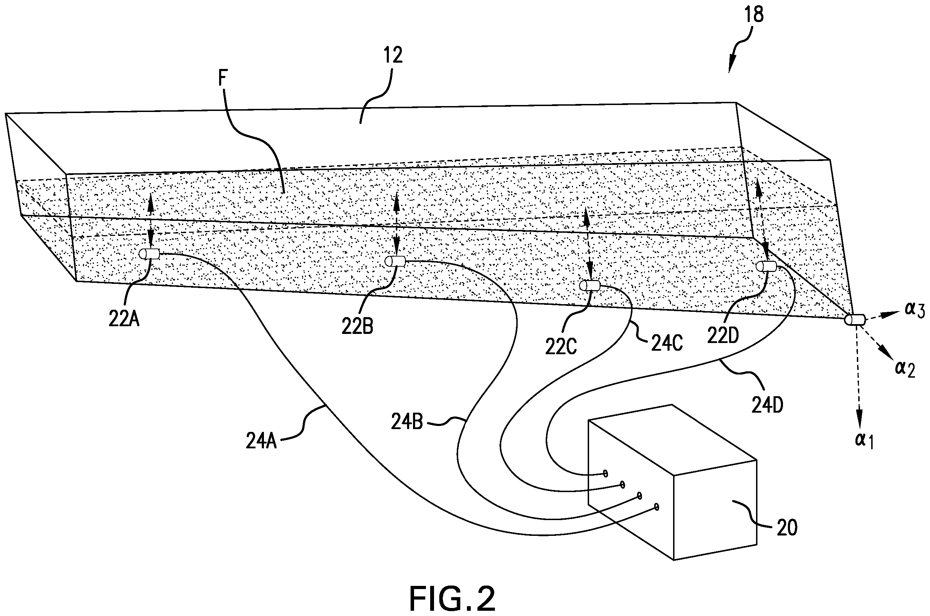

FIG. 2 is a perspective view of an example of a wing fuel tank with a system for measuring fuel pressure using temperature-compensated Fabry-Perot pressure sensors. In Fig. 2, pressure-measurement system 18 includes optical interrogator 20 interrogating Fabry-Perot pressure sensors 22A-22D. Each Fabry-Perot pressure sensors 22A, 24B, 24C or 22D is optically coupled to optical interrogator 16 via a corresponding one of optical fibers 24A, 24B, 24C or 24D. Each of Fabry-Perot pressure sensors 22A-22D is located at a corresponding location near a bottom surface of fuel tank 12. Because fuel tank 12 has a depth profile that changes with respect to lateral location, the depth of the fuel there-within can change with respect to the locations of Fabry-Perot pressure sensors 22A-22D.

Each of Fabry-Perot pressure sensors 22A-22D, is configured to generate an optical signal (e.g., a reflection of light at or near a resonant frequency of Fabry-Perot pressure sensors 22A-22D) that is indicative of pressure at its location within fuel tank 12. Signals indicative of pressure can be used to calculate a level of fuel F at such location (e.g., indicative of a level of fuel F above such Fabry-Perot pressure sensor 22A, 22B, 22C or 22D). For example, as a depth of fuel F above each of Fabry-Perot pressure sensors 22A-22D increases, so too will the pressure as indicated by Fabry-Perot pressure sensors 22A-22D increase. Therefore, each of Fabry-Perot pressure sensors 22A-22D generates an optical signal indicative of fuel level at its location within fuel tank 12.

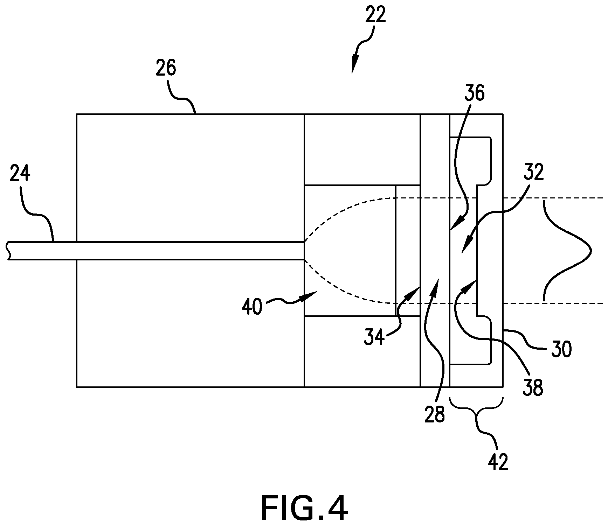

Optical interrogator 20 is configured to generate optical signals and transmit such generated light signals to each of Fabry-Perot pressure sensors 22A-22D, via optical fibers 24A-24D. Such optical signals can be frequency-swept monochromatic beams of light or can be broadband beams of light. Such optical beams can be continuous waves of light or a sequence of pulsed beams. The frequencies of such optical signals must include the frequencies of light that will be reflected by Fabry-Perot pressure sensors 22A-22D. In some embodiments, such optical signals are generated by a tunable laser. In other embodiments, such optical signals are generated by a Light Emitting Diode (an LED). As will be disclosed below with reference to FIG. 4, each of Fabry-Perot interferometers 22A-22D selectively reflects reflected portions of the optical signals. Such reflected portions are characterized by resonant frequencies *f₁* and *f₂* that are indicative of physical metrics of temperature and pressure of the fuel F.

Optical interrogator 20 receives these reflected portions of the optical beam reflected by the Fabry-Perot pressure sensors 22A-22D. Optical interrogator 20 generates a signal indicative of pressure of the fuel at each of the locations where Fabry-Perot pressure sensors 22A-22D are located. In some embodiments, because pressures as measured by Fabry-Perot pressure sensors 22A-22D can also change in response to changes in flight conditions, optical interrogator 20 can be configured to correct pressures for such changes in flight conditions. In such embodiments, optical interrogator can receive signals indicative of flight conditions or force moments due to such flight conditions. Optical interrogator 20 can then correct the pressures as indicated by the reflected portions of the optical signals based on the received signals indicative of flight conditions or force moments due to such flight conditions. In some embodiments, optical interrogator can then calculate an amount of fuel remaining with fuel tank 12, based on either the uncorrected or the corrected metrics of pressure as determined by optical interrogator 20. For example, remaining fuel can be calculated based on a weighted sum of the metrics of pressure as determined by optical interrogator 20.

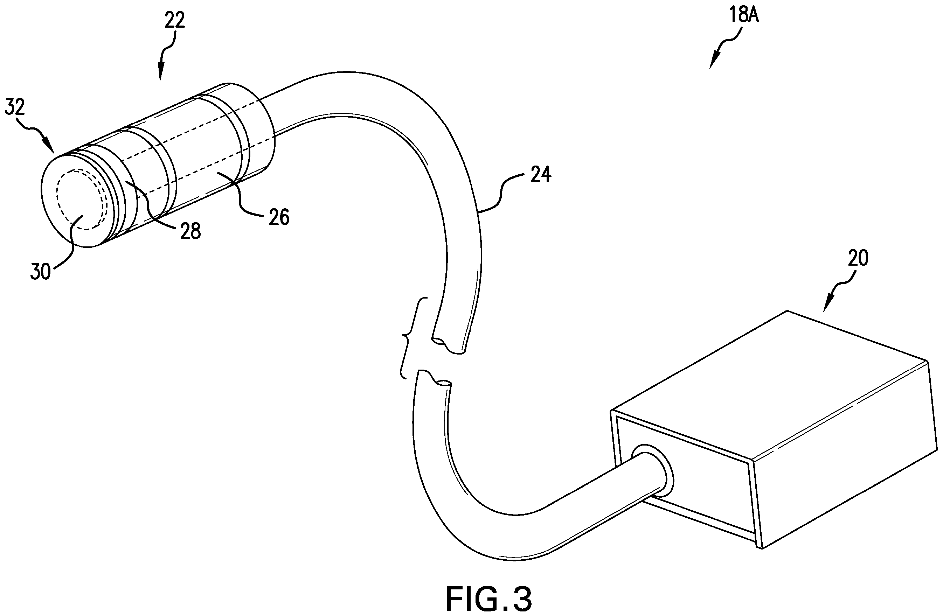

FIG. 3 is a perspective view of a system for measuring pressure of an ambient environment using a single temperature-compensated Fabry-Perot pressure sensor. In FIG. 1, system 18 includes optical interrogator 20 optically coupled with Fabry-Perot pressure sensor 22 via optical fiber 24. Optical fiber 24 is coupled to Fabry-Perot pressure sensor 22 via fiber ferrule 26, which both couples and aligns optical fiber 24 with Fabry-Perot pressure sensor 22. Fabry-Perot pressure sensor 22 includes optical plate 28 with nominal thickness *L₁(T₀).* Such nominal thickness *L₁(T₀)* is measured along optical axis A, which is perpendicular to first and second parallel faces of optical plate 12. Thickness of optical plate 28 has a non-zero coefficient of linear expansion α. Because of such a coefficient of linear expansion, the thickness of optical plate 28 is a function of temperature - *L₁(T)*=*L₁(T₀)·(1+α·(T-T₀)).* Optical plate 28 is configured to be substantially independent of pressures of the external environment. For example, Fabry-Perot pressure sensor can have a hermetically sealed housing that isolates the first and second parallel faces of optical plate 28 from pressures of the external environment. In such a configuration, neither the first parallel face of optical plate 28 nor the second parallel face of optical plate 28 are exposed to the pressures of the external environment.

First and second parallel faces of optical plate 28 are partially reflective to light normally incident thereon (i.e., in directions parallel to optical axis A) from within the optical plate. Such partially-reflective parallel faces form a first Fabry-Perot interferometer there-between. An optical path length of the first Fabry-Perot interferometer is given by *n(T)L₁(T)*, where *n(T)* is the index of refraction for optical plate 28. Because both the index of refraction *n(T)* of optical plate 28 and thickness *L₁(T)* of optical plate 28 are functions of temperature, the optical path length *n(T)L₁(T)* of the first Fabry-Perot interferometer is also a function of temperature. A resonant frequency *f₁(T)* of such a constructed Fabry-Perot interferometer will be temperature dependent as well. Such a resonant frequency is defined by the frequency at which constructive interference occurs for light reflected back-and-forth between first and second parallel faces. Such constructive interference occurs at multiples of a frequency of a fundamental resonance (i.e., the lower frequency of resonance). Such a fundamental resonant frequency of the first Fabry-Perot interferometer is given by *f₁(T)=c*/*(2n(T)L₁(T))*, where c is the speed of light in a vacuum. Because the thickness *L₁(T)* is a function of temperature, so too will the resonant frequency *f₁(T)* be a function of temperature. Because of the isolation of optical plate 28 from pressures of the external environment, the resonant frequency *f₁(T)* is independent of such pressures.

Fabry-Perot pressure sensor 22 also includes diaphragm 30 which is exposed to the external environment. Diaphragm 30 is configured to deform in response to changes in pressure of the external environment. In addition to being pressure dependent, deformation of diaphragm 30 is typically also temperature dependent. Diaphragm 30 has a mirrored face substantially parallel to and separated from the second face of optical plate 28A via a separating member. A nominal separation distance *L₂(T₀, Po)* between the mirrored face of diaphragm 30 and the second face of optical plate 28 is determined by such a separating member. The mirrored face of diaphragm 30 and the second face of optical plate 28 form optical cavity 32 there-between. The optical cavity has an optical path length *L₂(T, P)* that is both temperature and pressure dependent, due to the deformation dependencies of diaphragm 30. Typically, the index of refraction within the optical cavity is approximately equal to one, as the cavity is typically evacuated or filled with a transparent gas.

Such an optical cavity formed between partially reflective faces of two substantially parallel faces (i.e., the mirrored face of diaphragm 30 and the second face of optical plate 28) form a second Fabry-Perot interferometer. An optical path length of the second Fabry-Perot interferometer is given by *L₂(T, P).* A resonant frequency *f₁(T)* of such a constructed Fabry-Perot interferometer will be both pressure dependent and temperature dependent. Such a resonant frequency is defined by the frequency at which constructive interference occurs for light reflected back-and-forth between the mirrored face of diaphragm 30 and the second face of optical plate 28. Such constructive interference occurs at multiples of a frequency of a fundamental resonance (i.e., the lower frequency of resonance). Such a fundamental resonant frequency of the second Fabry-Perot interferometer is given by *f₂(T)=c*/*(2L₂(T, P))*, where c is the speed of light in a vacuum. Because the optical path length *L₂(T, P)* is both a function of temperature and a function of pressure, so too will the resonant frequency *f₂(T, P)* be both a function of temperature and a function of pressure.

FIG. 4 is a cross-sectional diagram of an embodiment of a temperature-compensated Fabry-Perot pressure sensor. In FIG. 4, Fabry-Perot pressure sensor 22 includes fiber ferrule 26, optical plate 28, diaphragm 30, and Graded Index (GRIN) lens 40. Fiber ferrule 26 aligns and couples optical fiber 24 to Fabry-Perot pressure sensor 22. The optical signal transmitted to Fabry-Perot pressure sensor 22 via optical fiber 24 diverges from an end face of optical fiber 24, which is immediately adjacent to or fused to GRIN lens 40. The optical signal diverges from the end face of optical fiber 24, which, if not subsequently collimated, would result in low optical efficiency as much of the transmitted signal would not result in reflections that would return to optical fiber 24. GRIN lens 40 is configured to collimate the optical signal that diverges from the end face of optical fiber 24 as indicated by the dashed lines in FIG. 4. GRIN lens is axially aligned with both optical plate 28 and diaphragm 30 along optical axis A. Because of such axial alignment, the optical signal collimated by GRIN lens 40 is directed perpendicular to faces of optical plate 28 and diaphragm 30. The collimated beam typically has a Gaussian intensity *profile I(r)* as indicated in the FIG. 4 depiction. The face of GRIN lens 40 from which the collimated beam is projected can be coated with an anti-reflective coating. Such a coating reduces unwanted reflections from the projection face of GRIN lens 40.

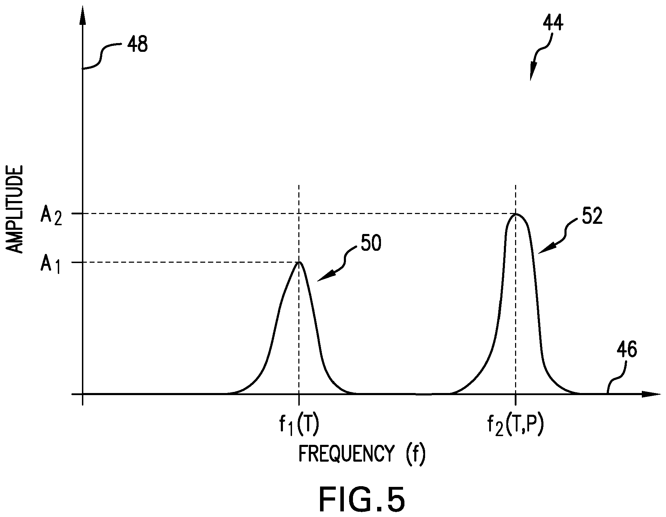

The collimated beam is then transmitted to optical plate 28, which has first and second parallel faces 34 and 36. Although a gap between GRIN lens 40 and optical plate 28 is depicted in FIG. 4, GRIN lens 40 can be located very close to, even in contact with, optical plate 28. First and second parallel faces 34 and 36 are configured to be partially reflective to light normally incident thereon from within the optical plate. Such partially reflective parallel faces 34 and 36 cause the collimated beam to reflect back-and-forth there-between, thereby forming a first Fabry-Perot interferometer there-between. Frequencies of light at which constructive interference occurs by such back-and-forth reflection results in a portion of the collimated beam reflected by optical plate 28 to be frequency dependent. Such frequency dependency will be described in more detail below with reference to FIG. 5. The portion of the collimate beam reflected by optical plate 28 will be directed back to GRIN lens 40, which then operates to focus such a reflected portion back onto the end face of optical fiber 24 and into optical fiber 24. Optical fiber 24 then transmits such reflected portions back to optical interrogator 20 (not depicted in FIG. 4), which will process the optical signal so as to determine temperature of optical plate 28.

Optical plate 28 can be made using optically transparent material that is thermally conductive, so as to facilitate thermal equilibrium between optical plate 28 and the external environment. Optical plate 28 can also be made using an optically transparent material that has a non-zero coefficient *α* of linear thermal expansion. For example, optical plate 28 can include any one or more of: MgAl₂O₄ spinel ceramic, aluminum oxynitride Aₗ₂₃N₂₇O₅ ceramic, Nd doped YAG, LaGd doped hafnium or zirconium oxide, polycrystalline Al₂O₃, or single crystal Al₂O₃. Because optical plate 28 is made of optical materials that have a non-zero coefficient *α* of linear thermal expansion, thickness *L₁(T)* of optical plate 28 is temperature dependent. Such temperature dependency of thickness *L₁(T)* results in the resonant frequencies that are also temperature dependent.

Because second parallel face 36 of optical plate 28 is only partially reflective (e.g., 50% reflective) from light within optical plate 28, a portion of the collimated optical signal transmits through optical plate 28 to reflective face 38 of diaphragm 30. Typically, mirrored face 38 of diaphragm 30 is reflective. In some embodiments, mirrored face 38 is not highly-reflective (e.g., having a reflectivity less than 90%, 75%, or about 50%). Because mirrored face 38 is not highly-reflective, some light can be transmitted through mirrored face 38. Light transmitted through reflective face 38 of diaphragm 30 can produce unwanted signals if such light finds its way back into optical fiber 24. To minimize such unwanted signals, diaphragm 30 can be made of opaque material and/or an exterior surface of diaphragm 30 can be roughened so as to minimize specular reflections of any light transmitted thereto. Thus, reflective face 38 of diaphragm 30 reflects a portion of the optical signal transmitted through optical plate 28 back onto second face 36 of optical plate 28. Second face 36 is also configured to be reflective of such light externally incident thereon via such reflection by mirrored face 38 of diaphragm 30. Such parallel reflective faces (i.e., second parallel face 36 of optical plate 28 and mirrored face 38 of diaphragm 30) again cause the collimated beam to reflect back-and-forth there-between, thereby forming a second Fabry-Perot interferometer there-between.

Frequencies of light at which constructive interference occurs by such back-and-forth reflection results in frequency dependency of a reflection of the collimated beam by optical cavity 32 formed between optical plate 28 and diaphragm 30. Reflected portions of the collimate beam will then return to optical plate 28 and ultimately to GRIN lens 40. GRIN lens 40 again operates to focus such reflected portions back onto the end face of optical fiber 24 and into optical fiber 24. Optical fiber 24 then transmits such reflected portions back to optical interrogator 20 (not depicted in FIG. 4), which will process the optical signal so as to determine the deflection of diaphragm 30 caused by pressure and temperature of the external environment. Diaphragm 30 deflects in response to both temperature and pressure of the external environment. Because deflection of diaphragm 30 is both temperature and pressure dependent, the optical path length *L₂(T, P)* of optical cavity 32 is both temperature and pressure dependent. The optical path length *L₂(T, P)* has a nominal value *L₂(T₀, P₀)* at nominal temperature *T₀* and nominal pressure *P₀.* Such a nominal optical path length is determined by a separation member42 that establishes a nominal separation distance between mirrored face 38 of diaphragm 30 and second parallel face 36 of optical plate 28. And because the optical path length *L₂(T, P)* of optical cavity 32 is both temperature and pressure dependent, the fundamental resonant frequency *f₂(T, P)* of the second Fabry-Perot interferometer is also both temperature dependent and pressure dependent.

FIG. 5 is an example of a spectral response of an embodiment of a temperature-compensated Fabry-Perot pressure sensor. In FIG. 5, graph 44 includes horizontal axis 46 and vertical axis 48. Horizontal axis 46 is indicative of frequency *f* of portions of an optical signal reflected by Fabry-Perot pressure sensor 22 (depicted in FIGS. 1-4). Vertical axis 48 is indicative of Amplitude of the portions of the optical signal reflected by Fabry-Perot pressure sensor 22. Graph 44 shows two peaks 50 and 52 in the portions of the optical signal reflected by Fabry-Perot pressure sensor 22. Peak 50 corresponds to portions of the optical signal reflected by the first Fabry-Perot interferometer depicted in FIGS. 3-4. Peak 50 is centered at resonant frequency *f₁(T)* of the first Fabry-Perot interferometer. Optical interrogator 20 can determine temperature of the external environment based on peak 50. Peak 52 corresponds to portions of the optical signal reflected by the second Fabry-Perot interferometer depicted in FIGS. 3-4. Peak 52 is centered at resonant frequency *f₂(T, P)* of the second Fabry-Perot interferometer. Such frequency response as indicated by peaks 50 and 52 can be obtained by optical interrogator 50 sweeping frequency of the optical signal generated and then measuring amplitude of portions reflected by Fabry-Perot pressure sensor 22. Such frequency response as indicated by peaks 50 and 52 can also be obtained by optical interrogator 50 generating a broadband optical signal that includes the frequencies at which first and second Fabry-Perot interferometers will have resonant frequencies. Regardless of how such a frequency response is obtained, optical interrogator 20 can determine pressure of the external environment based on peaks 50 and 52.

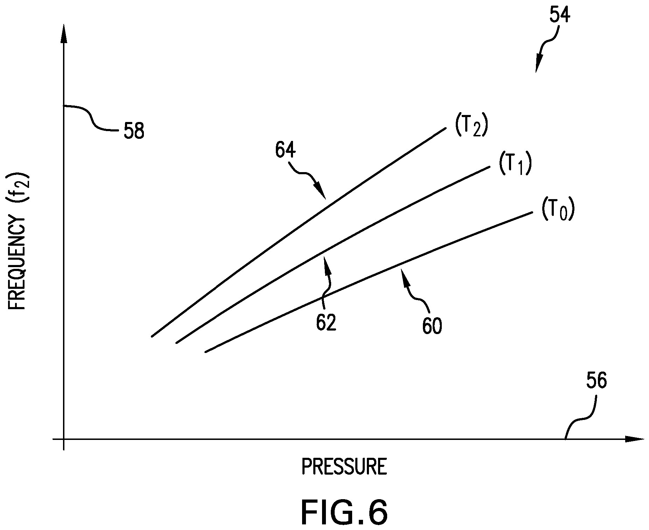

FIG. 6 is a graph of a family of pressure-frequency relations for a Fabry-Perot interferometer that is both pressure and temperature dependent. In FIG. 6, graph 54 includes horizontal axis 56 and vertical axis 58. Horizontal axis 56 is indicative of pressure of an external environment. Vertical axis 58 is indicative of resonant frequency of the second Fabry-Perot interferometer depicted in FIGS. 3 and 4. Graph 54 also includes frequency-pressure relations 60, 62 and 64. Each of frequency-pressure relations 60, 62 and 64 pertain a temperature of the external environment different from the temperatures of the external environment pertaining to the other frequency-pressure relations. Frequency-pressure relation 60 is obtained for an external environment at temperature T₀. Frequency-pressure relation 63 is obtained for an external environment at temperature T₁. And Frequency-pressure relation 64 is obtained for an external environment at temperature T₂. To obtain the pressure of the external environment, one must know the temperature of the external environment as well as the resonant frequency *f₂(T, P)* of the second Fabry-Perot interferometer. The temperature of the external environment can be determined based on the resonant frequency *f₁(T)* of the first Fabry-Perot interferometer.

### Discussion of Possible Embodiments

The following are non-exclusive descriptions of possible embodiments of the present invention.

Apparatus and associated methods relate to a system for measuring pressure of an external environment. The system includes an optical plate, a diaphragm, an optical cavity, and a graded index (GRIN) lens. The optical plate has nominal thickness *L₁(T₀)* measured along an axis perpendicular to first and second parallel faces that are partially reflective to light normally incident thereon from within the optical plate. Such configuration forms a first Fabry-Perot interferometer between the first and second parallel faces. The diaphragm has a mirrored face substantially parallel to and separated from the second face of the optical plate. The diaphragm deforms in response to changes in the pressure of the external environment thereby moving the mirrored face. The optical cavity is formed between the mirrored face of the diaphragm and the second face of the optical plate and spaced by a separating member. The separating member separates the mirrored face of the diaphragm and the second face of the optical plate by a nominal separation distance *L₂(T₀, P₀).* Such a configuration forms a second Fabry-Perot interferometer within the optical cavity between the second face of the optical plate and the mirrored face of the diaphragm. The graded-index (GRIN) lens is axially aligned with and adjacent to the first Fabry-Perot interferometer. The GRIN lens is configured to receive, at a first face of the GRIN lens, a diverging optical beam projected from a face of an optical fiber and to collimate the diverging optical beam so as to transmit a collimated optical beam from a second face of the GRIN lens to the first and second Fabry-Perot interferometers.

The system of the preceding paragraph can optionally include, additionally and/or alternatively, any one or more of the following features, configurations and/or additional components:

A further embodiment of the foregoing system, wherein: the optical plate can be comprised of a material of index *n(T)* and having a non-zero coefficient of linear thermal expansion *α*; and a first fundamental resonant frequency *f₁=c*/*(2n(T)L₁(T₀)(1+α (T-T₀))* is determined by the first optical path length *n(T)L₁(T₀)(1+α(T-T₀))* between the first and second parallel faces.

A further embodiment of any of the foregoing systems, wherein a second fundamental resonant frequency *f₂=c*/*(2L₂(T, P))* can be determined by the second optical path length *L₂(T, P)* between the first and second parallel faces.

A further embodiment of any of the foregoing systems can further include an optical interrogator that generates and transmits an optical beam to the optical fiber and receives a reflected portion of the optical beam reflected by the first and second Fabry-Perot interferometers. The optical interrogator can be further configured to determine the pressure of the external environment based on the reflected portion received.

A further embodiment of any of the foregoing systems, wherein the first and second optical path lengths can be different from one another.

A further embodiment of any of the foregoing systems, wherein the first and second optical path lengths can be not integer multiples of one another throughout the specified ranges of temperatures and pressures of the external environment.

A further embodiment of any of the foregoing systems, wherein a ratio of the first and second optical path lengths can be between 1.3 and 1.7 or between 2.3 and 2.7.

A further embodiment of any of the foregoing systems, wherein the first and second resonant frequencies can be not integer multiples of one another.

A further embodiment of any of the foregoing systems, wherein the optical interrogator can be further configured to scan frequencies of the optical beam generated to sweep through the first and second fundamental resonant frequencies of the first and second Fabry-Perot interferometers, respectively.

A further embodiment of any of the foregoing systems, wherein the optical interrogator can be further configured to determine the first and second fundamental resonant frequencies of the first and second Fabry-Perot interferometers, respectively, based on the reflected portion received.

A further embodiment of any of the foregoing systems, wherein the optical interrogator can determine pressure based on the first and second fundamental resonant frequencies of the first and second Fabry-Perot interferometers, respectively.

A further embodiment of any of the foregoing systems, wherein the optical interrogator can determine temperature based on the first fundamental resonant frequency of the first Fabry-Perot interferometer.

A further embodiment of any of the foregoing systems, wherein the optical interrogator can determine pressure based on the temperature determined and further based on the second fundamental resonant frequency of the second Fabry-Perot interferometer.

A further embodiment of any of the foregoing systems, wherein neither the first parallel face of the optical plate nor the second parallel face of the optical plate is exposed to the pressure of the external environment.

A further embodiment of any of the foregoing systems can further include a hermetically sealed housing that isolates the first and second parallel faces of the optical plate from pressures of the external environment.

A further embodiment of any of the foregoing systems, wherein the first face of the GRIN lens is fused to the optical fiber.

A further embodiment of any of the foregoing systems, wherein the separation member can circumscribe the cavity.

A further embodiment of any of the foregoing systems, wherein the optical plate comprises material selected from the group consisting of: mgAl₂O₄ spinel ceramic, Aluminum oxynitride Al₂₃N₂₇O₅ ceramic, Nd doped YAG, LaGd doped hafnium or zirconium oxide, polycrystalline Al₂O₃, or single crystal Al₂O₃.

Some embodiments relate to a method for measuring pressure of an external environment. The method includes forming a first Fabry-Perot interferometer between first and second parallel faces of an optical plate with nominal thickness *L₁(T₀)* measured along an axis perpendicular to first and second parallel faces, which are partially reflective to light normally incident thereon from within the optical plate. The method includes by deflecting, in response to changes in the pressure of the external environment, a diaphragm having a mirrored face substantially parallel to and separated from the second face of the optical plate, thereby moving the mirrored face. Then the method includes forming a second Fabry-Perot interferometer within an optical cavity formed between a mirrored face of a diaphragm and the second face of the optical plate. The method includes separating the mirrored face of a diaphragm and the second face of the optical plate by a nominal separation distance *L₂(T₀)* using a separating member. The method also includes collimating a diverging optical beam projected from a face of an optical fiber using a graded-index (GRIN) lens that is axially aligned with and adjacent to the first Fabry-Perot interferometer.

The method of the preceding paragraph can optionally include, additionally and/or alternatively, any one or more of the following features, configurations and/or additional components:

A further embodiment of the foregoing method, wherein the optical plate can be comprised of a material of index n and having a non-zero coefficient of linear thermal expansion *α*; and a first fundamental resonant frequency *f₁=c*/*(2n(T)L₁(T₀)(1 +α(T-T₀))* is determined by the first optical path length *n(T)L₁(T₀)(1+α(T-T₀))* between the first and second parallel faces.

It will be recognized that the invention is not limited to the implementations so described, but can be practiced with modification and alteration without departing from the scope of the appended claims. For example, the above implementations may include specific combination of features. However, the above implementations are not limited in this regard and, in various implementations, the above implementations may include the undertaking only a subset of such features, undertaking a different order of such features, undertaking a different combination of such features, and/or undertaking additional features than those features explicitly listed. The scope of the invention should, therefore, be determined with reference to the appended claims, along with the full scope of equivalents to which such claims are entitled.

## Claims

1. A system for measuring pressure of an external environment, the system comprising:
an optical plate with nominal thickness *L₁(T₀)* measured along an axis perpendicular to first and second parallel faces that are partially reflective to light normally incident thereon from within the optical plate, thereby forming a first Fabry-Perot interferometer between the first and second parallel faces;
a diaphragm having a mirrored face substantially parallel to and separated from the second face of the optical plate, the diaphragm deforming in response to changes in the pressure of the external environment thereby moving the mirrored face;
an optical cavity formed between the mirrored face of the diaphragm and the second face of the optical plate and spaced by a separating member, the separating member separating the mirrored face of the diaphragm and the second face of the optical plate by a nominal separation distance *L₂(T₀, P₀)* forming a second Fabry-Perot interferometer within the optical cavity between the second face of the optical plate and the mirrored face of the diaphragm; and
a graded-index (GRIN) lens that is axially aligned with and adjacent to the first Fabry-Perot interferometer, the GRIN lens configured to receive, at a first face of the GRIN lens, a diverging optical beam projected from an end face of an optical fiber and to collimate the diverging optical beam so as to transmit a collimated optical beam from a second face of the GRIN lens to the first and second Fabry-Perot interferometers.

2. The system of claim 1, wherein:
the optical plate is comprised of a material of index *n(T)* and having a non-zero coefficient of linear thermal expansion *α*; and
a first fundamental resonant frequency *f₁=c*/*(2n(T)L₁(T₀)(1+α (T-T₀))* is determined by the first optical path length *n(T)L₁(T₀)(1+α(T-T₀))* between the first and second parallel faces.

3. The system of claim 2, wherein:
a second fundamental resonant frequency *f₂=c*/*(2L₂(T, P))* is determined by the second optical path length *L₂(T, P)* between the first and second parallel faces.

4. The system of claim 3, further comprising:
an optical interrogator that generates and transmits an optical beam to the optical fiber and receives a reflected portion of the optical beam reflected by the first and second Fabry-Perot interferometers, the optical interrogator further configured to determine the pressure of the external environment based on the reflected portion received.

5. The system of claim 4, wherein the first and second optical path lengths are different from one another.

6. The system of claim 4 or 5, wherein the first and second optical path lengths are not integer multiples of one another throughout the specified ranges of temperatures and pressures of the external environment; and/or wherein the first and second resonant frequencies are not integer multiples of one another.

7. The system of claim 6, wherein a ratio of the first and second optical path lengths is between 1.3 and 1.7 or between 2.3 and 2.7.

8. The system of any one of claims 4-7, wherein the optical interrogator is further configured to scan frequencies of the optical beam generated to sweep through the first and second fundamental resonant frequencies of the first and second Fabry-Perot interferometers, respectively.

9. The system of claim 8, wherein the optical interrogator is further configured to determine the first and second fundamental resonant frequencies of the first and second Fabry-Perot interferometers, respectively, based on the reflected portion received.

10. The system of claim 9, wherein the optical interrogator determines pressure based on the first and second fundamental resonant frequencies of the first and second Fabry-Perot interferometers, respectively; and/or wherein the optical interrogator determines temperature based on the first fundamental resonant frequency of the first Fabry-Perot interferometer.

11. The system of claim 10, wherein the optical interrogator determines pressure based on the temperature determined and further based on the second fundamental resonant frequency of the second Fabry-Perot interferometer.

12. The system of any preceding claim, wherein:
neither the first parallel face of the optical plate nor the second parallel face of the optical plate is exposed to the pressure of the external environment; and/or
the system comprises a hermetically sealed housing that isolates the first and second parallel faces of the optical plate from pressures of the external environment.

13. The system of any preceding claim, wherein the first face of the GRIN lens is fused to the optical fiber; and/or wherein the separating member circumscribes the cavity.

14. The system of any preceding claim, wherein the optical plate comprises material selected from the group consisting of:
MgAl₂O₄ spinel ceramic,
aluminum oxynitride Al₂₃N₂₇O₅ ceramic,
Nd doped YAG,
LaGd doped hafnium or zirconium oxide,
polycrystalline Al₂O₃, or
single crystal Al₂O₃.

15. A method for measuring pressure of an external environment, the method comprising:
forming a first Fabry-Perot interferometer between first and second parallel faces of an optical plate with nominal thickness *L₁(T₀)* measured along an axis perpendicular to first and second parallel faces, which are partially reflective to light normally incident thereon from within the optical plate;
deflecting, in response to changes in the pressure of the external environment, a diaphragm having a mirrored face substantially parallel to and separated from the second face of the optical plate, thereby moving the mirrored face;
forming a second Fabry-Perot interferometer within an optical cavity formed between a mirrored face of a diaphragm and the second face of the optical plate;
separating the mirrored face of a diaphragm and the second face of the optical plate by a nominal separation distance *L₂(T₀)* using a separating member; and
collimating a diverging optical beam projected from an end face of an optical fiber using a graded-index (GRIN) lens that is axially aligned with and adjacent to the first Fabry-Perot interferometer;
optionally, wherein the optical plate is comprised of a material of index n and having a non-zero coefficient of linear thermal expansion *α*; a first fundamental resonant frequency *f₁=c*/*(2n(T)L₁(T₀)(1+α(T-T₀))* is determined by the first optical path length *n(T)L₁(T₀)(1+α(T-T₀))* between the first and second parallel faces.
